## Europäisches Patentamt
## European Patent Office
## Office européen des brevets

(19)

(11) **EP 0 670 811 B1**

(12)

# EUROPÄISCHE PATENTSCHRIFT

(45) Veröffentlichungstag und Bekanntmachung des Hinweises auf die Patenterteilung:
**24.04.1996  Patentblatt 1996/17**

(21) Anmeldenummer: **94901868.3**

(22) Anmeldetag: **24.11.1993**

(51) Int Cl.$^6$: **C01B 17/04**, B01D 53/34

(86) Internationale Anmeldenummer:
**PCT/EP93/03300**

(87) Internationale Veröffentlichungsnummer:
**WO 94/12430 (09.06.1994 Gazette 1994/13)**

(54) **VERFAHREN ZUR ENTSCHWEFELUNG EINES H2S-HALTIGEN ROHGASES**

PROCESS FOR DESULPHURATING A H2S-CONTAINING CRUDE GAS

PROCEDE DE DESULFURATION D'UN GAZ BRUT CONTENANT DU H2S

(84) Benannte Vertragsstaaten:
**DE IT NL SE**

(30) Priorität: **26.11.1992  DE 4239811**

(43) Veröffentlichungstag der Anmeldung:
**13.09.1995  Patentblatt 1995/37**

(73) Patentinhaber: **Linde Aktiengesellschaft D-65189 Wiesbaden (DE)**

(72) Erfinder:
- **HEISEL, Michael D-82049 Pullach (DE)**
- **MAROLD, Freimut D-85521 Ottobrunn (DE)**

(74) Vertreter: **Kasseckert, Rainer Linde Aktiengesellschaft, Zentrale Patentabteilung D-82049 Höllriegelskreuth (DE)**

(56) Entgegenhaltungen:
**EP-A- 0 049 008        EP-A- 0 141 169**
**EP-A- 0 160 332        EP-A- 0 252 497**
**DE-A- 3 842 599**

- **U.H.F. SANDER ET AL. 'Sulphur, Sulphur dioxide & Sulphuric Acid' 1984 , BRITISH SULPHUR CORP. , LONDON (GB)**
- **LINDE BERICHTE AUS TECHNIK UND WISSENSCHAFT Bd. 63 , 1989 , WIESBADEN (DE) Seiten 13 - 15 M.P. HEISEL ET AL. 'Das Clintox-Verfahren zur Reinigung von Claus-Abgasen'**

**Beschreibung**

Die Erfindung betrifft ein Verfahren zur Entschwefelung eines zumindest $H_2S$-haltigen Rohgasstromes in einer Claus-Anlage, einer Nachverbrennung des Claus-Abgases und einer Gaswäsche des Abgases der Nachverbrennung zur $SO_2$-Entfernung, wobei durch die Gaswäsche gewonnenes $SO_2$ vor die Claus-Anlage zurückgeführt wird.

Zur Gewinnung elementaren Schwefels aus $H_2S$-haltigen Gasströmen werden vielfach Claus-Anlagen eingesetzt. Hierbei wird in einem Claus-Ofen ein Teil des $H_2S$ zu $SO_2$ verbrannt. $SO_2$ und verbleibendes $H_2S$ werden in katalytischen/ thermischen Reaktoren entsprechend der Claus-Reaktion zu elementarem Schwefel und Wasser umgesetzt. Claus-Anlagen haben sich in der Praxis sehr gut bewährt. Der mit einer reinen Claus-Anlage erreichbare Entschwefelungsgrad (er liegt je nach Ausführung und Betrieb zwischen 90% und 97% des Rohgasschwefels) genügt jedoch heutigen Anforderungen zur Einschränkung der Schwefelemissionen in die Atmosphäre nicht. Zur Erhöhung des Entschwefelungsgrades und damit zur Senkung der Schwefelemission sind der Claus-Anlage nachgeschaltete zusätzliche Anlagenteile zur Weiterbehandlung des Claus-Abgases notwendig. Diese Weiterbehandlung des Claus-Abgases wird üblicherweise als "Tail Gas Treatment" bezeichnet.

Ein bekannte Verfahrensvariante sieht beispielsweise die Fortführung der in der Claus-Anlage unvollständig ablaufenden Umsetzung des gebundenen Schwefels in elementaren Schwefel vor. In nachgeschalteten Katalysatoren (weitere katalytische Claus-Stufen) läuft die Umsetzung zu Schwefel entsprechend des thermodynamischen Gleichgewichtes bei abgesenktem Temperaturniveau unterhalb des Schwefeltaupunkts (Sub-Dew-Point-Verfahren) weiter, wobei gleichzeitig elementarer Schwefel am Katalysator adsorbiert wird. Mehrere Reaktoren werden hierbei periodisch regeneriert bzw. auf Adsorption umgeschaltet. Nur durch eine sorgfältige Einstellung der Spülgaszusammensetzung beim Regenerieren kann eine vorzeitige Desaktivierung des Katalysators vermieden werden. Verunreinigte, schwefelhaltige Gase müssen, soweit sie in der Claus-Anlage nicht verarbeitet werden können, anderweitig entsorgt werden. Vom Claus-Abgas mitgeführte Schwefelkomponenten COS und $CS_2$ werden nur zu einem geringen Teil zu $H_2S$ und $CO_2$ hydrolysiert und erhöhen somit die Schwefelbelastung der Abgase. Verbrauchte Katalysatoren müssen entsorgt werden. Mit derartigen Verfahren werden bei relativ niedrigen Betriebs- und Investitionskosten Entschwefelungsgrade bis zu 99,6% bzw. bis zu 99,8% bei erheblich erhöhtem Aufwand und Kosten erzielt.

Eine andere Variante (Direktoxidationsverfahren) zur Weiterbehandlung des Claus-Abgases beinhaltet die Hydrierung aller Schwefelverbindungen zu $H_2S$, die im Claus-Abgas noch enthalten sind. Entstandenes $H_2S$ wird von einem wäßrigen Waschmittel in einer oxidativen Wäsche chemisch gebunden oder in einer Wasserabscheidestufe mit katalytischer Oxidation abgeschieden. Die oxidative Wäsche ermöglicht zwar eine Schwefelausbeute von 99,9%, allerdings mit sehr hohen Betriebs- und Investitionskosten. Bei katalytisch-oxidativen Verfahren bleibt der Entschwefelungsgrad aus thermodynamischen Gründen auf maximal 99,8% beschränkt.

Eine dritte Variante der Weiterbehandlung von Claus-Abgasen lehren die sogenannten Recycle-Verfahren, die allesamt eine Gaswäsche umfassen. Dabei muß das Claus-Abgas jedoch zuerst vollständig hydriert oder oxidiert werden. Bei der Hydrierung des Claus-Abgases wird das resultierende $H_2S$ in einer chemischen Wäsche ausgewaschen. Beim Regenerieren des Waschmittels wird $H_2S$ in konzentrierter Form freigesetzt und kann der Claus-Anlage wieder zugeführt werden. Für die Reduktion des $H_2S$ werden Gase mit Wasserstoff, Kohlenmonoxid oder Gasmischungen daraus eingesetzt. Der Umsetzungsgrad der Schwefelverbindungen in $H_2S$ ist von der Aktivität des Katalysators abhängig. Bei der Umsetzung zu $H_2S$ kann bei Anwesenheit von Kohlenstoff - beispielsweise in Form von CO - COS entstehen, das gesondert umzusetzen ist. Die Umsetzung zu $H_2S$ erfordert Reduktionsgas im Überschuß, so daß je nach $SO_2$-Gehalt der Claus-Abgase eine Nachverbrennung der gereinigten Gase erforderlich ist. Da neben $H_2S$ auch $CO_2$ vom Waschmittel absorbiert wird, ergibt sich eine $CO_2/H_2S$-Mischung als Rückführgas zur Claus-Anlage. Durch die Rückführung des Rückführgases zur Claus-Anlage muß diese entsprechend vergrößert werden. Der verbrauchte Katalysator muß entsorgt werden. Auf die beschriebene Art läßt sich zwar eine zufriedenstellende Entschwefelungsrate erreichen, allerdings durch sehr hohe Investitions- und Betriebskosten. Im zweiten Fall werden die im Claus-Abgas enthaltenen Schwefelverbindungen zu $SO_2$ oxidiert, wobei das Abgas der Nachverbrennung in eine nachgeschaltete Gaswäsche zur $SO_2$-Entfernung gegeben und durch die Gaswäsche gewonnenes $SO_2$ vor die Claus-Anlage zurückgeführt wird. Das Claus-Abgas wird unter Einsatz eines zusätzlich für die Nachverbrennung bereitzustellenden Brenngases verbrannt. Nachteile dieser Verfahrensführung sind die Emission von $CO_2$, CO und $H_2$, sowie das Anfallen von verschmutztem Abwasser und anderen Rückständen, deren Beseitigung bzw. Aufarbeitung mit hohen Kosten verbunden ist.

Das letztgenannte Verfahren ist beispielsweise in der EP-A-0 141 169 beschrieben, aus der ein Verfahren zur Entschwefelung eines zumindest $H_2S$-haltigen Rohgasstromes in einer Claus-Anlage, in einer Nachverbrennung des Claus-Abgases und in einer Gaswäsche des Abgases der Nachverbrennung zur $SO_2$-Entfernung bekannt ist, wobei durch die Gaswäsche gewonnenes $SO_2$ vor den Claus-Reaktor der Anlage, aber hinter dem Claus-Brenner zurückgeführt wird. Ferner wird in "Das CLINTOX®-Verfahren zur Reinigung von Claus-Abgasen", Linde-Berichte aus Technik und Wissenschaft, Heft 63, 1989, Wiesbaden (DE), Seiten 13 bis 15, ein Verfahren zur Entschwefelung eines zumindest $H_2S$-haltigen Rohgasstromes in einer Claus-Anlage, in einer Nachverbrennung des Claus-Abgases und in einer physikalischen Gaswäsche des Abgases der Nachverbrennung zur $SO_2$-Entfernung beschrieben, wobei durch die Gaswä-

sche gewonnenes $SO_2$ vor den Claus-Reaktor der Anlage, der einem Claus-Brenner nachgeschaltet ist, zurückgeführt wird.

Die genannten und für hohe Schwefelrückgewinnungsraten bedeutsamen Verfahren zur Reinigung des Claus-Abgases bestehen also im wesentlichen aus SubDewPoint-Verfahren (SDP-Verfahren), Direktoxidationsverfahren und Recycle-Verfahren. Einen Überblick über die verschiedenen Verfahren zur Reinigung des Claus-Abgases liefert beispielsweise der Artikel "Tail Gas Cleanup Process Technology", B. G. Goar, Energy Progress, Vol. 6, No. 2, June 1986, Seiten 84 bis 90.

Allen vorbeschriebenen bekannten Verfahren ist gemeinsam, daß sie das Claus-Abgas einer auf die Schwefelrückgewinnung optimierten und maximierten Claus-Anlage weiterverarbeiten.

Aus U.H.F. Sander et al., "Sulphur, Sulphur dioxide & Sulphuric Acid, 1984, BRITISH SULPHUR CORP:, London (GB), S. 56-58, ist eine katalytische oder thermische Nachverbrennung bei der Tail-Gas-Aufarbeitung bekannt.

Der vorliegenden Erfindung liegt die Aufgabe zugrunde, ein Verfahren der eingangs genannten Art aufzuzeigen, das ermöglicht, bei sehr hoher Schwefelrückgewinnungsrate die Umweltverträglichkeit der gesamten Anlage zu verbessern und insbesondere neben den Schwefelemissionen auch die übrigen Emissionen und anfallenden Reststoffe zu verringern.

Diese Aufgabe wird erfindungsgemäß dadurch gelöst, daß die Claus-Anlage einen Claus-Ofen umfaßt oder aus einer Direkt-Oxidations-Claus-Anlage besteht und daß zwischen 60% und 90%, vorzugsweise zwischen 67% und 85%, besonders bevorzugt zwischen 67% und 80%, des im Rohgas enthaltenen Schwefels in der Claus-Anlage direkt vom Rohgas abgeschieden und zwischen 33% und 10%, vorzugsweise zwischen 25% und 10%, besonders bevorzugt zwischen 20% und 15%, des ursprünglich im Rohgas enthaltenen Schwefels als $SO_2$ vor den Claus-Ofen der Claus-Analge oder vor die Direkt-Oxidations-Claus-Anlage zurückgeführt werden.

Die erfindungsgemäße Verfahrensführung ist entscheidend dadurch geprägt, daß im Gegensatz zum bislang Bekannten und entgegen der herrschenden Meinung der Fachleute die Schwefelabscheidung direkt aus dem Rohgas in der Claus-Anlage absichtlich nicht optimiert bzw. maximiert wird, sondern im Rahmen des Gesamtverfahrens optimiert wird. Überraschenderweise hat sich nämlich gezeigt, daß eine sehr hohe Schwefelrückgewinnungsrate von über 99,9% und weitere Vorteile durch die erfindungsgemäße Verfahrensführung erreichbar sind, obwohl die direkte Schwefelabscheidung vom Rohgas in der Claus-Anlage nicht optimiert ist. Die Claus-Anlage, die Nachverbrennung und die $SO_2$-Wäsche werden erfindungsgemäß so ausgelegt, daß das Claus-Abgas möglichst viel brennbare Komponenten aufweist, so daß die Nachverbrennung mit minimalem Einsatz von Fremdenergie arbeitet bzw. die erforderliche Menge an zusätzlichem Brenngas wesentlich verringert wird.

Beim konventionellen Betrieb von Claus-Anlagen wird das für die Claus-Reaktion benötigte $SO_2$ durch unterstöchiometrisches Verbrennen von $H_2S$ mit Luft erzeugt. Dazu wird üblicherweise Verbrennungsluft dem Claus-Ofen zugeführt, wobei der Sauerstoff der Verbrennungsluft zur Oxidation der Schwefelverbindungen in $SO_2$ dient. Mit jedem Mol $O_2$ aus Luft werden aber ca. 4 mol $N_2$ in den Claus-Ofen eingeleitet, wodurch eine große Menge an Inertgas in die Claus-Anlage eingebracht wird:

$$3H_2S + 3/2\,O_2 + (6\,N_2) =$$

$$2\,H_2S + SO_2 + H_2O + (6\,N_2) =$$

$$3/x\,S_x + 3\,H_2O + (6\,N_2).$$

Die Schwefelgewinnung im erfindungsgemäßen Verfahren ist jedoch im wesentlichen bestimmt durch die Gleichung

$$2H_2S + SO_2 = 3/x\,S_x + 2\,H_2O.$$

Da die $SO_2$-Konzentration bei der erfindungsgemäßen $SO_2$-Rückführung im Rückführstrom typischerweise bei über 90 Mol-% $SO_2$ liegt, wird der Claus-Anlage im erfindungsgemäßen Verfahren fast kein Inertgas zugeführt. Eine erhöhte $SO_2$-Rückführung bedeutet also einen kleineren Gesamtstrom durch die Claus-Anlagen. Damit wird die Kapazität einer Claus-Anlage durch die erfindungsgemäß hohe $SO_2$-Rückführung erhöht. Die Kapazitätserhöhung soll an zwei Beispielen erläutert werden. Der Gasstrom einer konventionellen Claus-Anlage mit 100 kmol/h stehe für eine Kapazität der Claus-Anlage von 100%. Bei einer $SO_2$-Rückführung von 5% des Rohgasschwefels sinkt der Gasstrom durch die Claus-Anlage auf 95 kmol/h, während die Kapazität der Claus-Anlage auf 105,3% anwächst. Bei einer $SO_2$-Rückführung von 15% des Rohgasschwefels reduziert sich der Gasstrom durch die Claus-Anlage auf 84 kmol/h, während sich die Kapazität der Claus-Anlage auf 119,0% erhöht.

Wie oben ausgeführt, wird durch die höhere $SO_2$-Rückführung vor die Claus-Anlage die Kapazität der Claus-Anlage erhöht. Die Betriebskosten der Claus-Anlage werden dadurch aber auch insgesamt niedriger, da längere Katalysatorstandzeiten aufgrund höherer tolerierbarer Katalysatoralterung erreicht werden. Im erfindungsgemäßen Verfahren wird eine $COS/CS_2$-Hydrolyse im ersten Claus-Reaktor überflüssig, da beide Komponenten in der Nachverbrennung zu $SO_2$ oxidiert und über die Gaswäsche zur Claus-Anlage zurückgeführt werden. Durch die erfindungsgemäße Verfahrensführung wird die teure und anfällige Regelung des für die Claus-Reaktion optimalen $H_2S:SO_2$-Verhältnisses wesentlich vereinfacht, da dieses Verhältnis nur langfristig, nicht aber ständig, exakt eingestellt sein muß (ein "Air Demand Analyser" der Claus-Anlage kann entfallen).

Schmutzige Claus-Rohgasströme , die außer $H_2S$ auch HCN, $NH_3$, Karbonyle, Phenole oder andere Kohlenwasserstoffe enthalten, führen in konventionellen Verfahren aufgrund unvollständiger Verbrennung im Claus-Ofen zu Schwierigkeiten. Im erfindungsgemäßen Verfahren treten derartige Probleme nicht auf. Im Gegenteil nutzt das erfindungsgemäße Verfahren den Brennwert dieser Problemstoffe vollständig aus. Typischerweise sind im Claus-Abgas noch CO, $H_2$, $H_2S$, Schwefeldampf und organische Schwefelverbindungen enthalten. Alle diese brennbaren Komponenten werden erfindungsgemäß in der Nachverbrennung als Brenngas eingesetzt. Dadurch wird Zusatzbrennstoff eingespart, was zu geringeren Betriebskosten und zu einer geringeren Emission an $CO_2$, das ja als "Treibhausgas" inzwischen ebenfalls zu den Schadgasen zählt, führt. Bei der Nachverbrennung entstehen vor allem Wasser aus $H_2$, $H_2S$ und $NH_3$, sowie $SO_2$ aus $CS_2$, $S_2$, $H_2S$ und COS, aber auch $CO_2$ aus CO, COS, $CS_2$. Alle diese Komponenten sind bereits im Rohgas enthalten. Fremdenergie in Form von Brenngas ist daher im erfindungsgemäßen Verfahren in sehr geringem Ausmaß erforderlich. Damit wird die Abgasmenge der gesamten Anlage gegenüber bekannten Verfahren wesentlich verringert. Das erfindungsgemäße Verfahren produziert keine festen oder flüssigen Reststoffe, die entsorgt werden müßten. Das erfindungsgemäße Verfahren zeichnet sich daher durch seine außerordentlich hohe Umweltverträglichkeit aus.

Für die nachfolgende Gaswäsche kommen sowohl chemische als auch physikalisch wirkende Waschverfahren in Frage.

Besondere Vorteile sind bei der erfindungsgemäßen Verfahrensführung dadurch zu erzielen, daß die Gaswäsche zur $SO_2$-Entfernung mit einem physikalisch wirkenden Absorptionsmittel betrieben wird. Als Absorptionsmittel können dabei alle bekannten physikalisch wirkenden Waschmittel zur $SO_2$-Auswaschung verwendet werden, insbesondere organische Absorptionsmittel.

Bei einer physikalischen Gaswäsche löst das physikalisch wirkende Absorptionsmittel die zu entfernende Komponente in Abhängigkeit ihres Partialdruckes und ihrer Löslichkeit in dem Absorptionsmittel. Es findet keine chemische Reaktion zwischen Absorptionsmittel und der zu entfernenden Komponente statt. Während bei einer chemischen Wäsche eine Erhöhung des $SO_2$-Gehaltes im Abgas der Nachverbrennung eine Erhöhung der zirkulierenden Absorptionsmittelmenge erforderlich macht, ändert sich der Absorptionsmittelumlauf bei der physikalischen Wäsche nicht, da aufgrund des höheren Partialdruckes proportional mehr $SO_2$ im Absorptionsmittel gelöst wird. Der $SO_2$-Gehalt im Reingas bleibt unabhängig von der Eingangskonzentration der Gaswäsche annähernd konstant. Diese Eigenschaft der physikalischen Wäsche hat zur Folge, daß auch die zur Regenerierung des Absorptionsmittels benötigte Energie nahezu unabhängig vom $SO_2$-Gehalt ist. Das Ausstrippen des gelösten $SO_2$ bei der Regenerierung erfordert nur wenig Energie, weil die das $SO_2$ bindenden Kräfte klein sind. Deshalb sind die Betriebskosten, aber auch die Investitionskosten, des erfindungsgemäßen Verfahrens mit einer physikalischen Wäsche vergleichsweise günstig. Die Verbrauchszahlen am Beispiel einer derartigen Anlage mit vorgeschalteter Nachverbrennung für eine 100-tato-Claus-Anlage betragen:

| | |
|---|---|
| Elektrischer Energiebedarf (inkl. Kühlturm) | 240 kW |
| Brennstoff bei einer Nachverbrennungstemperatur von 800°C, z.B. Sauerwasser-Stripper-Gas | 2,5 kmol/h |
| Hochdruckdampf > 25 bar (Erzeugung) | 2,9 t/h |
| Niederdruckdampf mit 1,5 bar (Verbrauch) | 1,0 t/h |
| Absorptionsmittelverluste | 10 DM/d (1991) |
| Kühlwasser-Make-Up | 3,0 $m^3$/h |

Bei der erfindungsgemäß geringeren Schwefelumsetzung direkt aus dem Rohgas in der Claus-Anlage ist die $SO_2$-Konzentration nach der Nachverbrennung entsprechend hoch. Diese Tatsache hat aber aus den oben angeführten Gründen auf die physikalische Gaswäsche kaum Einfluß. In Ausgestaltung des erfindungsgemäßen Verfahrens ist es deshalb ohne weiteres möglich, einen Teilstrom des Rohgases unter Umgehung der Claus-Anlage direkt in die Nachverbrennung zu leiten. Beim erfindungsgemäßen Verfahren kann daher trotz der insgesamt sehr hohen Schwefelrückgewinnungsrate die Claus-Anlage entsprechend kleiner ausgelegt werden. Dadurch werden Betriebs- und Investitionskosten zusätzlich reduziert.

Erfindungsgemäß wird im Claus-Ofen einer Claus-Anlage eine Temperatur zwischen 850 und 1300°C, vorzugsweise zwischen 900 und 1100°C, eingestellt. Das durch die Gaswäsche gewonnene und zur Claus-Anlage zurückgeführte $SO_2$ ist mengenmäßig (lediglich) dadurch begrenzt, daß das zurückgeführte $SO_2$ die Temperatur der Brennkammer des Claus-Ofens nicht unter 850°C drücken darf. Andernfalls sind zusätzliche Maßnahmen zur Vorwärmung erforderlich.

Gemäß einer Ausgestaltung des erfindungsgemäßen Verfahrens enthält die Claus-Anlage neben dem Claus-Ofen einen oder mehrere katalytische und/oder thermische Reaktoren zur Schwefelerzeugung, sowie Kondensatoren zur Schwefelgewinnung bzw. Abtrennung des elementaren Schwefels vom Gasstrom.

Mit Vorteil wird dabei der erste katalytische Reaktor mit einer Eintrittstemperatur von 170 bis 220°C gefahren. Vorteilhafterweise liegt die Eintrittstemperatur im ersten katalytischen Reaktor zwischen 1 und 10°C, vorzugsweise zwischen 3 und 5°C, oberhalb der Austrittstemperatur eines vorgeschalteten Kondensators zur Schwefelabtrennung. Bevorzugt wird der in der Durchströmungsrichtung letzte Kondensator zur Schwefelgewinnung bei einer Temperatur zwischen 130°C und 170°C, vorzugsweise zwischen 140°C und 160°C, betrieben. Dadurch wird neben einer Verringerung des Foulings auch die Produktion von höherwertigem Dampf ermöglicht. Die verminderte Abscheidung von Schwefel wird durch das erfindungsgemäße Verfahren kompensiert.

Mit Vorteil wird im erfindungsgemäßen Verfahren eine katalytische oder thermische Nachverbrennung eingesetzt. Bei katalytischer Nachverbrennung ist der Abgasstrom minimal, weil die Verbrennungstemperatur niedriger liegt als bei einer thermischen Nachverbrennung und somit weniger Brennstoff für die Nachverbrennung erforderlich ist. Die Grenzen der Verwendbarkeit einer katalytischen Nachverbrennung und damit der Einsatzfall einer thermischen Nachverbrennung kann gegeben sein durch zu geringe Umsätze von Schadstoffen wie beispielsweise COS und $CS_2$ oder durch zu hohe Reaktionstemperaturen, die den Katalysator beschädigen oder zerstören würden, oder bei Anwesenheit von Katalysatorgiften.

Das erfindungsgemäße Verfahren nutzt alle im Claus-Abgas enthaltenen brennbaren Komponenten, wie beispielsweise Kohlenwasserstoffe, CO, $H_2$, Schwefeldampf, $H_2S$, $CS_2$, COS, $NH_3$ und HCN, als Brenngas für die Nachverbrennung aus. Zusätzlich kann sowohl bei der Wiederanwärmung in der Claus-Anlage als auch bei der Nachverbrennung billiger, schwefelhaltiger Brennstoff anstatt des nach konventionellen Verfahren erforderlichen teuren, schwefelfreien Brennstoffes verbraucht werden. Insbesondere kann Abgas einer Sauerwasser-Strippung, das sogenannte Sauerwasser-Stripper-Abgas, in die Nachverbrennung als Brenngas gegeben werden anstatt, wie nach konventionellen Verfahren notwendig, durch die Claus-Anlage geleitet werden zu müssen. Damit werden die bekannten mit Sauerwasser-Stripper-Abgasen verbundenen Probleme vermieden, wie beispielsweise Verlegung der Wärmetauscher, Rußbildung, verfärbter Schwefel, Korrosion, Katalysatorsulfatierung.

In weiterer Ausgestaltung des erfindungsgemäßen Verfahrens wird bei der Nachverbrennung durch Reaktion entstehendes Wasser vor der Gaswäsche zur $SO_2$-Entfernung auskondensiert und zur Kühlung dieser Gaswäsche eingesetzt.

Die Erfindung sei im folgenden anhand mehrerer in Figuren dargestellter Ausführungsbeispiele näher erläutert. Dabei zeigen:

Fig. 1     ein Blockdiagramm einer Claus-Anlage mit Nachverbrennung und nachgeschalteter $SO_2$-Wäsche,

Fig. 2     eine einstufige Claus-Anlage mit Claus-Ofen und einem katalytischen Reaktor, sowie einer thermischen Nachverbrennung,

Fig. 3     eine ausschließlich thermische Claus-Anlage mit thermischer Nachverbrennung,

Fig. 4     eine beispielhafte erfindungsgemäße $SO_2$-Wäsche.

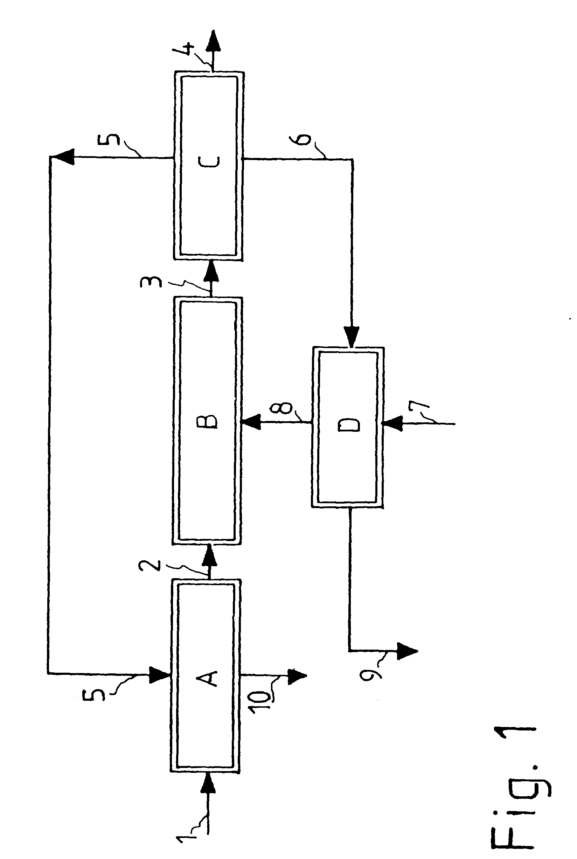

Äquivalente sind in allen Figuren mit gleichen Bezugzeichen bzw. Bezugsziffern versehen. Im Blockdiagramm von Fig. 1 wird ein Claus-Rohgas 1 einer Claus-Anlage A zugeführt. Das Claus-Abgas 2 wird in eine Nachverbrennung B gegeben. Das Abgas 3 der Nachverbrennung B wird schließlich in die Gaswäsche C geleitet, wo $SO_2$ ausgewaschen wird. Über Leitung 4 wird Reingas aus der Gaswäsche C abgezogen. Das bei der Regenerierung des Absorptionsmittels der Gaswäsche C gewonnene $SO_2$ wird über Leitung 5 zur Claus-Anlage A zurückgeführt. In der Gaswäsche C anfallendes Prozeßkondensat wird über Leitung 6 einer Strippung D zugeführt. Das Prozeß-Kondensat aus Leitung 6 wird mit Luft aus Leitung 7 gestrippt. Das gestrippte Prozeßkondensat in Leitung 9 besteht hauptsächlich aus Wasser und kann beispielsweise zu Kesselspeisewasser aufgearbeitet werden. Das Stripper-Abgas 8 wird in der Nachverbrennung B des Claus-Abgases 2 eingesetzt. In der Claus-Anlage A zurückgewonnener elementarer Schwefel wird über Leitung 10 abgezogen.

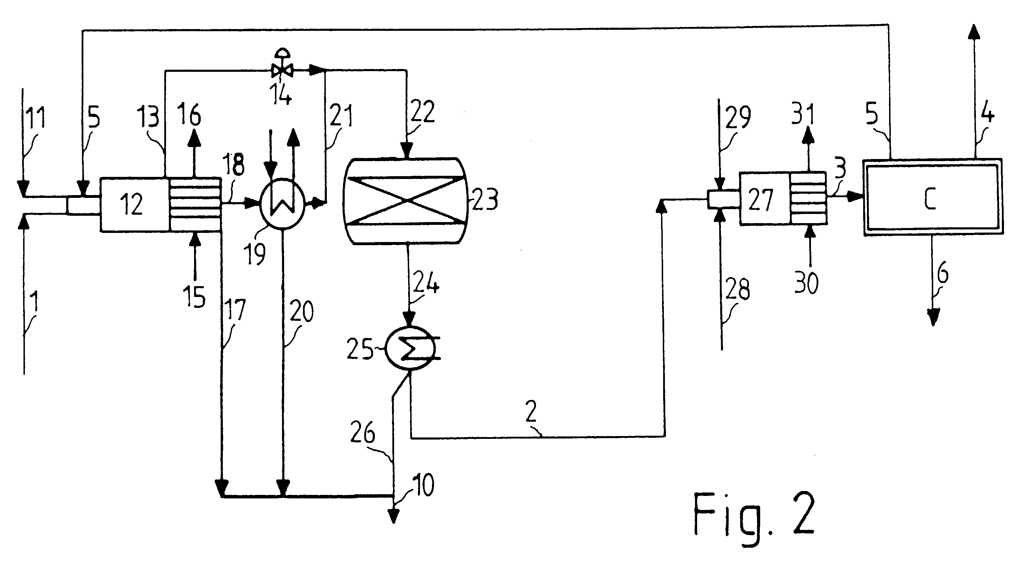

Beim in Fig. 2 dargestellten Ausführungsbeispiel wird Claus-Rohgas 1, gegebenenfalls Luft 11 und zurückgeführtes $SO_2$ 5 in einen Claus-Ofen 12 gegeben. Ein Teil des Claus-Ofen-Abgases wird über Leitung 13, durch Regelventil 14 mengenmäßig begrenzt, heiß vom Claus-Ofen abgezogen, während das restliche Claus-Ofen-Abgas durch Verdampfen von Kesselspeisewasser 15 abgekühlt und über Leitung 18 abgezogen wird. Der durch Verdampfung des Kesselspeisewassers 15 erzeugte Dampf fällt in Leitung 16 an. Bei der Abkühlung auskondensierter elementarer Schwefel wird über Leitung 17 vom Claus-Ofen 12 abgezogen.

Das vorgekühlte Claus-Ofen-Abgas in Leitung 18 wird weiter abgekühlt, wobei wiederum elementarer Schwefel auskondensiert und über Leitung 20 abgezogen wird. Das nach der Abkühlung 19 in Leitung 21 vorliegende Claus-Ofen-Abgas wird mit heißerem Claus-Ofen-Abgas aus Leitung 13 vermischt und über Leitung 22 in den katalytischen Reaktor 23 eingespeist. Regelventil 14 wird dabei so eingestellt, daß der Gasstrom in Leitung 22 eine Temperatur von 170 bis 220°C aufweist. Diese Eintrittstemperatur des katalytischen Reaktors 23 liegt zwischen 1 und 10°C, vorzugsweise zwischen 3 und 5°C, über der Temperatur des Gasstromes in Leitung 21. Der vom katalytischen Reaktor 23 abgezogene Gasstrom 24 wird gekühlt (25), wobei durch die Kühlung 25 auskondensierter elementarer Schwefel über Leitung 26 abgezogen wird. Der innerhalb der Claus-Anlage rückgewonnene elementare Schwefel aus Leitungen 17, 20 und 26 wird in Leitung 10 zusammengeführt. Die Abkühlung 25 des Gasstromes 24 erfolgt nur soweit, daß der aus der Claus-Anlage zur thermischen Nachverbrennung 27 geführte Gasstrom 2 eine Temperatur von ca. 160°C aufweist. Über Leitung 28 wird Brenngas und über Leitung 29 Luft in die Nachverbrennung 27 eingespeist. Die in der thermischen Nachverbrennung 27 anfallende Wärme wird teilweise zur Erzeugung von Dampf 31 aus Kesselspeisewasser 30 genutzt. Das Abgas der Nachverbrennung wird über Leitung 3 in die Gaswäsche C geleitet. $SO_2$-Reichgas aus der Gaswäsche C wird über Leitung 5 zur Claus-Anlage zurückgeführt. Mit dem in Fig. 2 gezeigten Verfahren können Claus-Rohgasströme mit einem $H_2S$-Gehalt von 40 bis 100 Vol.-% verarbeitet werden. Bei Verwendung von reinem Sauerstoff anstelle von Luft kann sogar Rohgas im Bereich von 20 bis 100 Vol.-% $H_2S$ aufgearbeitet werden.

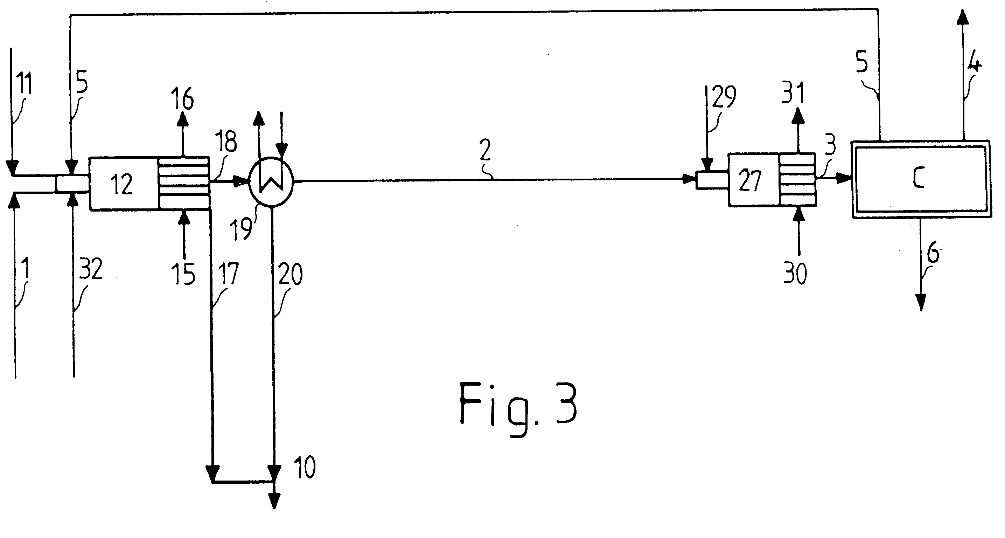

Das in Fig. 3 dargestellte Verfahren umfaßt eine ausschließlich thermische Claus-Anlage. In den Claus-Ofen 12 werden das Claus-Rohgas 1, Luft 11, Brennstoff 32 und zurückgeführtes $SO_2$-Reichgas 5 gegeben. Das Abgas 2 der Claus-Anlage wird - wie bereits im Zusammenhang mit dem Verfahrensschema von Fig. 2 ausgeführt - in eine Nachverbrennung und Gaswäsche geleitet. Das in Fig. 3 dargestellte Verfahren ermöglicht eine Aufarbeitung von Claus-Rohgasen mit einem $H_2S$-Gehalt von 80 bis 100 Vol.-% beim Einsatz von Luft, und von Claus-Rohgasen mit einem $H_2S$-Gehalt von 40 bis 100 Vol.-% beim Einsatz von reinem Sauerstoff.

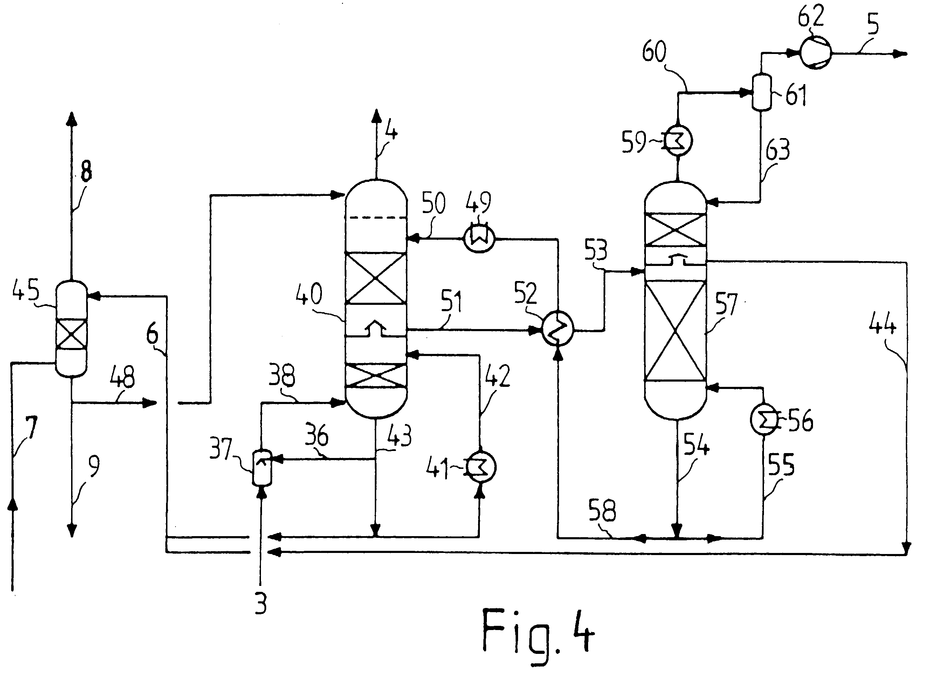

Im in Fig. 4 gezeigten Verfahrensschema ist eine erfindungsgemäße physikalische Gaswäsche mit Strippung des Prozeßkondensats aus der Gaswäsche ausgeführt. Das Verfahrensschema in Fig. 4 stellt dabei ein Beispiel für die Gaswäsche C und Strippung D aus Fig. 1 dar. Das Claus-Abgas 3 wird mit Wasser aus Leitung 36 abgequencht (37) und über Leitung 38 in den unteren Bereich der Waschsäule 40 eingespeist. Im unteren Bereich der Waschsäule 40 wird eine Wasserwäsche mit im wesentlichen aus Wasser bestehendem, vom Sumpf der Waschsäule 40 abgezogenem (43) und nach Abkühlung (41) wieder in den unteren Abschnitt der Waschkolonne 40 eingespeistem Prozeßkondensat 42 durchgeführt. Dieser Direktkontaktkühler im unteren Bereich der Waschsäule 40 senkt die Gastemperatur des Claus-Abgases weiter und scheidet gleichzeitig den überwiegenden Teil des aus der Claus-Reaktion entstandenen Wassers ab. Das nicht vom Prozeßkondensat 43 für den Wasserquench abgezweigte (36) oder für die Wasserwäsche über Leitung 42 abgetrennte Prozeßkondensat wird mit aus der Regenerierung anfallendem Prozeßkondensat in Leitung 44 vermischt und über Leitung 6 in die Strippsäule 45 eingespeist. Dort wird das Prozeßkondensat mit Verbrennungsluft 7 für die Nachverbrennung gestrippt. Aus dem Prozeßkondensat 6 in der Strippsäule 45 ausgestrippte Schwefelkomponenten werden mit der Verbrennungsluft über Leitung 8 von der Strippsäule 45 zur Nachverbrennung geleitet. Vom Fuß der Strippsäule 45 wird gereinigtes Prozeßkondensat über Leitung 9 abgezogen, das beispielsweise zu Kesselspeisewasser aufgearbeitet werden kann. Ein Teil des gestrippten und vom Fuß der Strippkolonne 45 abgezogenen Prozeßkondensats wird über Leitung 48 auf den Kopf der Waschsäule 40 aufgegeben. Dieser Prozeßkondensatstrom dient zur Rückwaschung des Waschmittels am Kopf der Waschsäule 40, so daß vom Kopf der Waschsäule 40 Schwefel- und Absorptionsmittel-freies Reingas 4 abgezogen wird. Über Leitung 50 wird mit Kühlwasser vorgekühltes (49) physikalisch wirkendes Absorptionsmittel in die Waschkolonne 40 eingeleitet. Oberhalb des Kaminbodens, der den eigentlichen Waschbereich der Waschsäule 40 vom Direktkontaktkühler im unteren Bereich abtrennt, wird Absorptionsmittel über Leitung 51 von der Waschsäule 40 abgezogen. Beladenes Absorptionsmittel aus Leitung 51 wird im Wärmetauscher 52 gegen regeneriertes Absorptionsmittel aus Leitung 58 angewärmt und über Leitung 53 in die Regenerierkolonne 57 eingespeist. Regeneriertes Absorptionsmittel wird vom Sumpf der Regenerierkolonne 57 über Leitung 54 abgezogen und zu einem Teil über Leitung 55 im Aufkocher 56 mit Niederdruckdampf angewärmt und erneut in die Regenerierkolonne 57 eingespeist. Der Aufkocher 56 wird dabei durch Abwärme mit einem Temperaturniveau von ca. 100 bis 140°C beheizt, z.B. durch den in Durchströmungsrichtung letzten Schwefelkondensator der Claus-Anlage anfallenden Niederdruckdampf. Das Überkopfprodukt der Regenerierkolonne 57 wird abgekühlt (59) und über Leitung 60 dem Abscheider 61 zugeführt. Im Abscheider 61 vom Überkopfprodukt der Regenerierkolonne 57 auskondensiertes Kondensat wird über Leitung 63 zum Kopf der Regenerierkolonne 57 zurückgeführt. Vom Abscheider 61 wird $SO_2$-Reichgas abgezogen und über den Kompressor 62, üblicherweise eine Wasserringpumpe, zur Claus-Anlage über Leitung 5 zurückgefördert. Vom oberen Bereich der Regenerierkolonne 57 wird oberhalb des Kaminbodens über Leitung 54 Prozeßkondensat abgezogen und über Leitung 6 in die Strippsäule 45 geführt.

**Patentansprüche**

1. Verfahren zur Entschwefelung eines zumindest $H_2S$-haltigen Rohgasstromes in einer Claus-Anlage, einer Nachverbrennung des Claus-Abgases und einer Gaswäsche des Abgases der Nachverbrennung zur $SO_2$-Entfernung,

wobei durch die Gaswäsche gewonnenes $SO_2$ zur Claus-Anlage zurückgeführt wird, **dadurch gekennzeichnet,** daß die Claus-Anlage einen Claus-Ofen umfaßt oder aus einer Direkt-Oxidations-Claus-Anlage besteht und daß zwischen 60% und 90%, vorzugsweise zwischen 67% und 85%, besonders bevorzugt zwischen 67% und 80%, des im Rohgas enthaltenen Schwefels in der Claus-Anlage direkt vom Rohgas abgeschieden und zwischen 33% und 10%, vorzugsweise zwischen 25% und 10%, besonders bevorzugt zwischen 20% und 15%, des ursprünglich im Rohgas enthaltenen Schwefels als $SO_2$ vor den Claus-Ofen der Claus-Analge oder vor die Direkt-Oxidations-Claus-Anlage zurückgeführt werden.

2. Verfahren nach Anspruch 1, dadurch gekennzeichnet, daß die Gaswäsche zur $SO_2$-Entfernung mit einem physikalisch wirkenden Absorptionsmittel betrieben wird.

3. Verfahren nach Anspruch 1 oder 2, dadurch gekennzeichnet, daß ein Teilstrom des Rohgases unter Umgehung der Claus-Anlage direkt in die Nachverbrennung geleitet wird.

4. Verfahren nach einem der Ansprüche 1 bis 3, dadurch gekennzeichnet, daß die Claus-Anlage neben einem Claus-Ofen einen oder mehrere katalytische und/oder thermische Reaktoren zur Schwefelerzeugung und Kondensatoren zur Schwefelgewinnung enthält.

5. Verfahren nach Anspruch 4, dadurch gekennzeichnet, daß der erste katalytische Reaktor mit einer Eintrittstemperatur von 170 bis 220°C gefahren wird.

6. Verfahren nach Anspruch 4 oder 5, dadurch gekennzeichnet, daß die Eintrittstemperatur des ersten katalytischen Reaktors zwischen 1 und 10°C, vorzugsweise zwischen 3 und 5°C, über der Austrittstemperatur eines vorgeschalteten Kondensators zur Schwefelgewinnung liegt.

7. Verfahren nach einem der Ansprüche 4 bis 6, dadurch gekennzeichnet, daß der in Durchströmungsrichtung letzte Kondensator zur Schwefelgewinnung bei einer Temperatur zwischen 130°C und 170°C, vorzugsweise zwischen 140°C und 160°C, betrieben wird.

8. Verfahren nach einem der Ansprüche 1 bis 7, dadurch gekennzeichnet, daß der Claus-Ofen bei einer Temperatur zwischen 850 und 1300°C, vorzugsweise zwischen 900 und 1100°C, betrieben wird.

9. Verfahren nach einem der Ansprüche 1 bis 8, dadurch gekennzeichnet, daß eine katalytische oder thermische Nachverbrennung eingesetzt wird.

10. Verfahren nach einem der Ansprüche 1 bis 9, dadurch gekennzeichnet, daß im Claus-Abgas enthaltene, brennbare Komponenten wie beispielsweise Kohlenwasserstoffe, CO, $H_2$, Schwefeldampf, $H_2S$, $CS_2$, COS, $NH_3$ und HCN als Brenngas verwendet werden.

11. Verfahren nach einem der Ansprüche 1 bis 10, dadurch gekennzeichnet, daß gegebenenfalls in der Anlage anfallendes Sauerwasser-Stripper-Abgas als Brenngas verwendet wird.

12. Verfahren nach einem der Ansprüche 1 bis 11, dadurch gekennzeichnet, daß bei der Nachverbrennung durch Reaktion entstehendes Wasser vor der Gaswäsche zur $SO_2$-Entfernung auskondensiert und zur Kühlung dieser Gaswäsche eingesetzt wird.

**Claims**

1. Process for desulphurisation of a stream of raw gas containing at least $H_2S$ in a Claus installation, after-combustion of the waste gas from the Claus installation and scrubbing of the waste gas from the after-combustion for removal of $SO_2$, $SO_2$ obtained by the scrubbing being returned to the Claus installation, characterised in that the Claus installation comprises a Claus furnace or consists of a direct oxidation Claus installation and in that between 60% and 90%, preferably between 67% and 85%, in particular preferably between 67% and 80%, of the sulphur contained in the raw gas is separated directly from the raw gas in the Claus installation and between 33% and 10%, preferably between 25% and 10%, in particular preferably between 20% and 15%, of the sulphur originally contained in the raw gas is returned in the form of $SO_2$ to the Claus furnace of the Claus installation or to the direct oxidation Claus installation.

**2.** Process according to claim 1, characterised in that the scrubbing for removal of $SO_2$ is effected using a physically acting absorption medium.

**3.** Process according to claim 1 or 2, characterised in that a part stream of the raw gas is passed directly for after-combustion bypassing the Claus installation.

**4.** Process according to one of claims 1 to 3, characterised in that in addition to a Claus furnace the Claus installation comprises one or more catalytic and/or thermal reactors for production of sulphur and condensers for recovery of sulphur.

**5.** Process according to claim 4, characterised in that the first catalytic reactor is operated with an inlet temperature of 170 to 220°C.

**6.** Process according to claim 4 or 5, characterised in that the inlet temperature of the first catalytic reactor lies between 1 and 10°C, preferably between 3 and 5°C, above the outlet temperature of a preceding condenser for recovery of sulphur.

**7.** Process according to one of claims 4 to 6, characterised in that the last condenser for recovery of sulphur in the direction of flow is operated at a temperature of between 130°C and 170°C, preferably between 140°C and 160°C.

**8.** Process according to one of claims 1 to 7, characterised in that the Claus furnace is operated at a temperature of between 850 and 1300°C, preferably between 900 and 1100°C.

**9.** Process according to one of claims 1 to 8, characterised in that catalytic or thermal after-combustion is used.

**10.** Process according to one of claims 1 to 9, characterised in that combustible components contained in the waste gas from the Claus installation such as for example hydrocarbons, CO, $H_2$, sulphur vapour, $H_2S$, $CS_2$, COS, $NH_3$ and HCN are used as fuel gas.

**11.** Process according to one of claims 1 to 10, characterised in that sour water stripper waste gas possibly occurring in the installation is used as fuel gas.

**12.** Process according to one of claims 1 to 11, characterised in that water formed by reaction during the after-combustion is condensed out before the scrubbing for removal of $SO_2$ and used for cooling this scrubbing stage.


**Revendications**

**1.** Procédé de désulfuration d'un courant de gaz brut contenant au moins du $H_2S$ dans une installation Claus, de post-combustion des effluents gazeux d'une installation Claus et de lavage des gaz effluents de la post-combustion pour l'élimination de $SO_2$ dans lequel le $SO_2$ récupéré par le lavage des gaz est recyclé dans l'installation Claus, caractérisé en ce que l'installation Claus comprend un four Claus ou bien est constituée d'une installation Claus à oxydation directe et qu'environ 60% à 90%, de préférence 67 à 85%, plus particulièrement 67 à 80% du soufre contenu dans le gaz brut est séparé directement du gaz brut dans l'installation Claus et que 33 à 10%, de préférence 25 à 10% et plus particulièrement 20 à 15% du soufre primitivement contenu dans le gaz brut sont recyclés sous forme de $SO_2$ en amount du four Claus de l'installation Claus ou en amount de l'installation Claus à oxydation directe.

**2.** Procédé selon la revendication 1, caractérisé en ce que le lavage du gaz pour l'élimination de $SO_2$ est effectué à l'aide d'un absorbant agissant physiquement.

**3.** Procédé selon la revendication 1 ou 2, caractérisé en ce qu'une fraction du gaz brut est amenée directement à la post-combustion en évitant l'installation Claus.

**4.** Procédé selon l'une quelconque des revendications 1 à 3, caractérisé en ce que l'installation Claus comprend, au voisinage d'un four Claus, un ou plusieurs réacteurs catalytique(s) et/ou thermique(s) pour l'obtention du soufre et des condenseurs pour la récupération du soufre.

**5.** Procédé selon la revendication 4, caractérisé en ce que le premier réacteur catalytique fonctionne avec une température d'entrée de 170 à 220°C.

6. Procédé selon la revendication 4 ou 5, caractérisé en ce que la température de l'entrée du premier réacteur catalytique est supérieure de 1 à 10°C, de préférence de 3 à 5°C, à la température de sortie d'un condenseur de récupération du soufre en amount.

7. Procédé selon l'une quelconque des revendications 4 à 6, caractérisé en ce que le dernier condenseur de récupération du soufre, dans le sens du courant, fonctionne à une température de 130 à 170°C, de préférence 140 à 160°C.

8. Procédé selon l'une quelconque des revendications 1 à 7, caractérisé en ce que le four Claus fonctionne à une température de 850 à 1300°C, de préférence 900 à 1100°C.

9. Procédé selon l'une quelconque des revendications 1 à 8, caractérisé en ce qu'on utilise une post-combustion catalytique ou thermique.

10. Procédé selon l'une quelconque des revendications 1 à 9, caractérisé en ce que les constituants combustibles, comme par exemple les hydrocarbures, CO, $H_2$, vapeur de soufre, $H_2S$, $CS_2$, COS, $NH_2$ et HCN contenus dans les gaz effluents de l'installation Claus, sont utilisés comme gaz combustibles.

11. Procédé selon l'une quelconque des revendications 1 à 9, caractérisé en ce que les gaz effluents du stripper à solution acide éventuellement présents dans l'installation sont utilisé comme gaz combustibles.

12. Procédé selon l'une quelconque des revendications 1 à 11, l'eau se formant dans les réactions de post-combustion est condensée en amount du lavage des gaz en vue de l'élimination de $SO_2$ et utilisée pour le refroidissement du lavage des gaz.

Fig. 1

Fig. 2

EP 0 670 811 B1

Fig. 3

EP 0 670 811 B1

Fig. 4